# EUROPEAN PATENT APPLICATION

(11) **EP 4 845 285 A1**
(43) Date of publication of application: **25.11.2026**
(21) Application number: 25781750.2
(22) Date of filing: 02.04.2025
(51) Int. Cl.: H04W 74/00

(54) **MESSAGE TRANSCEIVING METHOD, AND TERMINAL, NETWORK DEVICE AND STORAGE MEDIUM**

(30) Priority: 03.04.2024 CN 202410403336
(71) Applicant: Datang Mobile Communications Equipment Co., Ltd., Beijing 100085 (CN)
(72) Inventor: ZHANG, Xiangdong, Beijing 100085 (CN); WANG, Junwei, Beijing 100085 (CN)
(74) Representative: Ipsilon
(86) International application number: PCT/CN2025/086946
(87) International publication number: WO 2025/209548

(57) **Abstract**

The present disclosure relates to a message transceiving method, and a terminal, a network device and a storage medium. The method is applied to a terminal and comprises: receiving a first resource configuration; and transmitting information on a first resource indicated by the first resource configuration, wherein the bandwidth of the first resource is greater than or equal to a preset bandwidth threshold, and/or the power spectral density for transmitting the information on the first resource is less than or equal to a preset power spectral density threshold value.

## Description

### CROSS-REFERENCE

The present application claims priority to Chinese Patent Application No. 2024104033366, entitled "Messaging Method, Terminal, Network Device and Storage Medium", filed on April 3, 2024, the entire contents of which are incorporated herein by reference.

### TECHNICAL FIELD

The present disclosure relates to the field of communication technologies, and in particular, to a messaging method, a terminal, a network device and a storage medium.

### BACKGROUND

With a rapid increase in the number of terminals, 6G is faced with a great development opportunity. Initial access and data transmission of a massive number of terminals will be limited by network coordination signaling resources and data transmission resources. In addition, a utilization rate of traditional random access resources is relatively low, as such traditional random access resources can only be used for random access and cannot be used for data transmission. Therefore, there is an urgent need to provide an efficient access method to support access of massive terminals.

### SUMMARY

Based on this, in order to solve the above technical problem, there are provided a messaging method, a terminal, a network device, a storage medium and a computer program product.

In a first aspect, the present disclosure provides a messaging method applied to a terminal, including:
receiving a first resource configuration; and
transmitting information on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In a second aspect, the present disclosure provides a messaging method applied to a first network device, including:
sending a first resource configuration to a terminal; and
sending and receiving messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In a third aspect, the present disclosure further provides a terminal, including:
a memory for storing a computer program; a transceiver for transceiving data under control of a processor; and the processor for reading the computer program in the memory and performing the following operations:
receiving a first resource configuration; and
transmitting information on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In a fourth aspect, the present disclosure further provides a network device, including:
a memory for storing a computer program; a transceiver for transceiving data under control of a processor; and the processor for reading the computer program in the memory and performing the following operations:
sending a first resource configuration to a terminal; and
sending and receiving messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In a fifth aspect, the present disclosure further provides a terminal, including:
a sending and receiving module configured to receive a first resource configuration sent by a first network device; and
send and receive messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In a sixth aspect, the present disclosure further provides a network device, including:
a sending and receiving module configured to send a first resource configuration to a terminal; and
send and receive messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In a seventh aspect, the present disclosure further provides a computer-readable storage medium having a computer program stored thereon, the computer program, when executed by a processor, implementing the method in the first aspect or according to any embodiment thereof, or the method in the second aspect or according to any embodiment thereof.

In an eighth aspect, the present disclosure further provides a computer program product including a computer program which, when executed by a processor, implements the method in the first aspect or according to any embodiment thereof, or the method in the second aspect or according to any embodiment thereof.

In the messaging method, the device, the apparatus, the storage medium and the computer program product, the terminal may receive the first resource configuration and may transmit information on the first resource indicated by the first resource configuration, the bandwidth of the first resource is greater than or equal to the preset bandwidth threshold, and/or the power spectral density for transmission of the information on the first resource is less than or equal to the preset power spectral density threshold. With the solution, the bandwidth of the first resource is large enough, and the power spectral density during transmission of the information on the first resource is small enough, thus improving a resource utilization efficiency. For example, even if the first resource is overlapped or partially overlapped with a resource (such as a random access resource and a data transmission resource) with a relatively small bandwidth defined by a mobile communication network, the first resource can still be used for random access or other data transmission.

The above description is only an overview of the technical solution of the present disclosure. In order to better understand the technical means of the present disclosure, it can be implemented in accordance with the contents of the specification, and in order to make the above and other objects, features, and advantages of the present disclosure more clearly understand, the specific implementation of the present disclosure is listed below.

### BRIEF DESCRIPTION OF THE DRAWINGS

Various other advantages and benefits will become apparent to those skilled in the art by reading through the following detailed description of embodiments. The accompanying drawings are only intended to illustrate embodiments and not to be construed as limiting the present disclosure. In all the drawings, like reference numerals denote like components. In the drawings:
FIG. 1 is a schematic diagram of band division of a multi-band UWB;
FIG. 2 is a schematic diagram of band usage of a multi-band UWB;
FIG. 3 is a schematic flow diagram of a messaging method according to an embodiment of the present disclosure;
FIG. 4 is a schematic diagram in which a UE transmits uplink data to a TN base station using an uplink frequency of an NTN;
FIG. 5 is another schematic diagram in which a UE transmits uplink data to a TN base station using an uplink frequency of an NTN;
FIG. 6 is a schematic flow diagram of another messaging method according to an embodiment of the present disclosure;
FIG. 7 is a schematic diagram of a first resource and a second resource according to an embodiment of the present disclosure;
FIG. 8 is a schematic flow diagram of still another messaging method according to an embodiment of the present disclosure;
FIG. 9 is a schematic structural diagram of a communication device according to an embodiment;
FIG. 10 is a structural block diagram of a terminal according to an embodiment of the present disclosure; and
FIG. 11 is a structural block diagram of a first network device according to an embodiment of the present disclosure.

### DETAILED DESCRIPTION

The embodiments of the technical solutions of the present disclosure will be described in detail below with reference to the accompanying drawings. The following embodiments are only used to illustrate the technical solutions of the present disclosure more clearly, and are therefore only used as examples, and should not be construed as limiting the protection scope of the present disclosure.

Unless defined otherwise, all technical and scientific terms used herein have the same meaning as commonly understood by one of ordinary skill in the art to which this disclosure belongs. The terminology used herein is for the purpose of describing particular embodiments only and is not intended to be limiting of the disclosure. The terms "including", "comprising" and any variations thereof in the description and claims of the present disclosure and in the preceding description of the drawings are intended to cover a non-exclusive inclusion.

In the description of the embodiments of the present disclosure, the technical terms such as "first", "second", or the like, are merely used for distinguishing different objects, and are not intended to indicate or imply relative importance or significance or to imply the number, specific sequence or primary and secondary relationship of indicated technical features. In the description of the embodiments of the present disclosure, "plurality" means two or more, unless otherwise clearly and specifically limited.

Reference herein to "an embodiment" means that a particular feature, structure, or characteristic described in connection with the embodiment may be included in at least one embodiment of the present disclosure. The appearances of this phrase in various places in the specification are not necessarily all referring to the same embodiment, nor referring to separate or alternative embodiments mutually exclusive of other embodiments. It is explicitly and implicitly understood by those skilled in the art that the embodiments described herein can be combined with other embodiments.

In the description of the embodiments of the present disclosure, the term "and/or" herein only describes an association relationship between associated objects, and indicates that three relationships may exist. For example, A and/or B may indicate three cases: only A exists; both A and B exist; and only B exists. In addition, the character "/" herein generally indicates an "or" relationship between the associated objects.

A plurality of international organizations research new wireless communication systems (6G), and an important driving force is an increase of the number of access terminals which are mainly machine type devices, and a density of the terminals in key technical indexes can reach tens of millions per square kilometer.

Initial access and data transmission of a massive number of terminals are limited by network coordination signaling and data transmission resources. Ordinary contention-based access technologies cannot accommodate such a massive number of terminals, and each random access resource occupies one Physical Resource Block (PRB), so that such a huge number of terminals need tens of thousands of PRBs or more, and the number far exceeds a total number of system PRBs. In addition, the traditional random access resource is only used for random access, and even if no terminal uses the resource for random access, the resource cannot be used for data transmission, so that a large number of system resources are consumed and an efficiency is low.

An Ultra Wideband (UWB) is a technology for transmitting low power density signals in a large bandwidth to realize communication. The UWB is defined as follows: under the condition that amplitude attenuation is -10dB, a corresponding absolute bandwidth is 500MHz or more or a relative bandwidth is 20% or more (this is the definition when the Federal Communications Commission (FCC) approved civil use of the UWB technology in February 2002). The UWB aims to realize frequency reuse by transmitting signals at low transmitting power spectral densities (not greater than -41.3dBm) over an extremely wide bandwidth, and these frequencies may be allocated to other systems for use.

The U.S. FCC stipulates that the UWB technology can transmit signals at transmitting power spectral densities not greater than -41.3dBm within a bandwidth from 3.1GHz to 10.6GHz to realize communication. The frequency band from 3.1GHz to 10.6GHz includes a frequency band for satellite communication, a frequency band for the Unlicensed National Information Infrastructure (U-NII), and industrial, scientific and medical frequency bands. When these frequency bands are used in the UWB, the use cannot interfere with normal communication of existing communication systems within the frequency bands, and these communication systems cannot be required to perform any coordination or concession for use of the UWB. Therefore, the transmitting power spectral densities of the UWB over these frequency bands are required to be no higher than -41.3dBm.

Frequency domain resources allocated for use by the UWB and corresponding power spectral density limits in different countries are different, and for example, the resources and the limits in China are shown below in Table 1:

**Table 1**

| Frequency range (GHz) | Limit (dBm/MHz) |
|---|---|
| Below 1.6GHz | -90 |
| 1.6-3GHz | -85 |
| 3.6-60GHz | -70 |
| 6.0-9.0 | -41 |
| 9.0-10.6 | -70 |
| Above 10.6GHz | -85 |

As shown in Table 1, for current regulations in China, the frequency band that may be applicable to the UWB is 6GHz to 9GHz. The UWB technology may also be used in other frequency bands, but the power spectral density is lower and a transmitting power is more limited. The Radio Management Regulations for Ultra-Wideband (UWB) Equipment updated by the Ministry of Industry and Information Technology in 2023, the spectrum of the UWB is updated to 7235-8750MHz.

Currently, implementation technologies of the UWB mainly include two major categories:

pulsed UWB: in this manner, data transmission is performed by sending pulses with extremely small widths (e.g., 0.2ns to 1.5ns). Since the pulse width is extremely small, a signal bandwidth is large. A modulation method is pulse modulation, that is, information is transmitted directly by modulating the width, amplitude, position or presence of the pulse.

Multi-band OFDM UWB (MB-OFDM UWB): in the technology, the frequency domain resources allocated for use by the UWB are divided into a plurality of band groups, each band group includes a plurality of bands, and each band has a bandwidth of 528MHz. In actual use, the band on which data is transmitted is controlled by a time-frequency code (TFC).

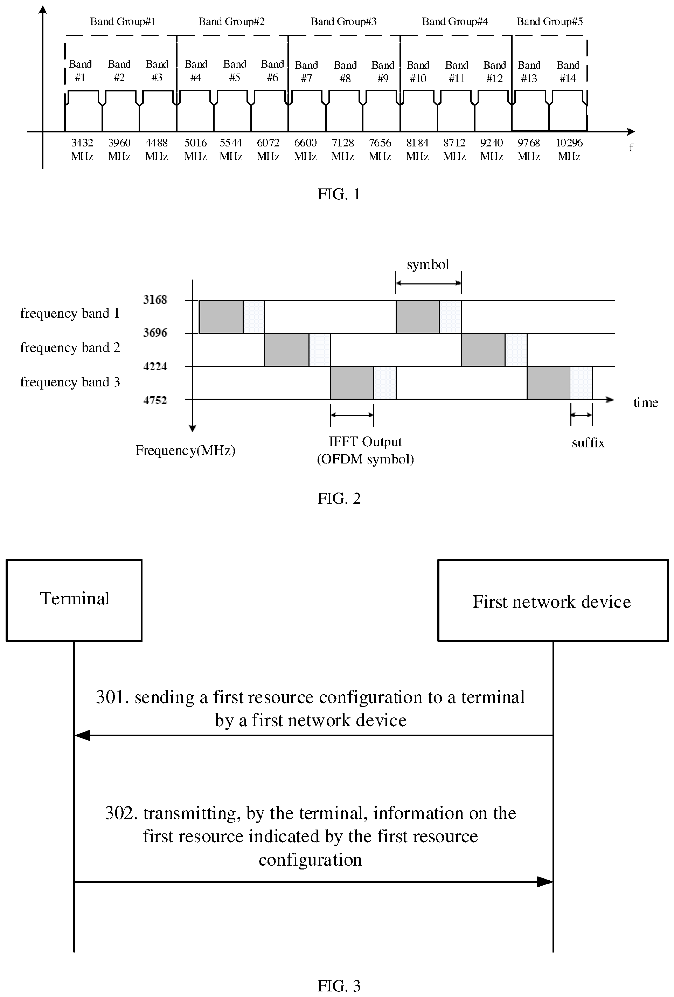

FIG. 1 shows a schematic diagram of band division of the multi-band UWB. In the schematic diagram of band division, the frequency is divided into a plurality of band groups in the frequency (f) latitude represented by the horizontal axis, and the vertical axis in FIG. 1 has no practical meaning. These band groups are Band Group#1, Band Group#2, Band Group#3, Band Group#4 and Band Group#5 in FIG. 1, each of the band groups includes 2 bands or 3 bands, and as shown in FIG. 1, all the included bands are Band#1, Band#2, Band#3, Band#4, Band#5, Band#6, Band#7, Band#8, Band#9, Band#10, Band#11, Band#12, Band#13, and Band#14.

FIG. 2 shows a schematic diagram of band usage of a multi-band UWB. In FIG. 2, frequency band 1 is used in the first transmission, frequency band 2 is used in the second transmission, frequency band 3 is used in the third transmission, and the frequency band 1, the frequency band 2, and the frequency band 3 are different bands. The IFFT in FIG. 2 represents Inverse Fast Fourier Transform, and the OFDM represents Orthogonal Frequency Division Multiplexing.

In view of massive access in 6G, currently proposed technologies include an uncoordinated random access technology which eliminates most coordination between a terminal and a network and can support the scenario of a huge number of terminals. Compared with the traditional random access mechanism, the resource efficiency is improved, but the technology still uses a frequency resource of a mobile communication network, and the resource allocated to uncoordinated random access can only be used for random access.

In the embodiments of the present disclosure, with reference to the UWB technology, a UWB-based access mechanism is implemented in the mobile communication network: a UWB resource is configured for random access; coexistence of UWB-based random access and the traditional random access method is realized. Certainly, the UWB resource configured in the mobile communication network may also be used for data and signaling transmission, for example, subsequent transmission of signaling, channels, signals, data, or the like, after network access is completed.

In a messaging method according to the embodiment of the present disclosure, a terminal is capable of receiving a first resource configuration and transmitting information on a first resource indicated by the first resource configuration, a bandwidth of the first resource is greater than or equal to a preset bandwidth threshold, and/or a power spectral density for transmission of the information on the first resource is less than or equal to a preset power spectral density threshold. With the solution, the bandwidth of the first resource is large enough, and the power spectral density during transmission of the information on the first resource is small enough, thus improving a resource utilization efficiency. For example, even if the first resource is overlapped or partially overlapped with a resource (such as a random access resource, a data transmission resource, etc.) with a relatively small bandwidth defined by a mobile communication network, the first resource can still be used for random access or other data transmission.

In the embodiment of the present disclosure, a network device may be an access network device, and the network device may be a base station, an evolved node b (eNB), a base station in 5G, 6G or future X-G networks, a satellite, or the like. In X-G, X may be 7, 8 or larger, and may represent a "generation" number of evolutions or iterations of the communication system. For example, there may be 7th generation communication systems, 8th generation communication systems, or the like, in the future. The same applies to the following description, and no further explanation is performed.

In the embodiment of the present disclosure, the terminal may be User Equipment (UE), and the terminal is also referred to as a terminal device. Exemplarily, the terminal may include, but is not limited to, a smart phone, a computer, a vehicle-mounted terminal, a smart home device, a wearable device, or the like.

It should be noted that, in the embodiment of the present disclosure, the first resource refers to one type of resource, and a second resource refers to another type of resource.

FIG. 3 is a schematic flow diagram of a messaging method according to an embodiment of the present disclosure, and the method includes, but is not limited to, the following steps.

301: sending a first resource configuration to a terminal by a first network device.

Correspondingly, the terminal receives the first resource configuration sent by the first network device.

The first resource configuration is configured for indicating a first resource.

302: transmitting, by the terminal, information on the first resource indicated by the first resource configuration.

Correspondingly, the first network device transmits information on the first resource.

A bandwidth of the first resource is greater than or equal to a preset bandwidth threshold, and/or a power spectral density for transmission of the information on the first resource is less than or equal to a preset power spectral density threshold.

The above information may include, but is not limited to, any of signaling, channels, signals and data.

In some embodiments, the messaging method according to the embodiment of the present disclosure further includes: determining, by the terminal, that the terminal device has the capability of transmitting information based on the first resource.

In some embodiments, the terminal transmits information on the first resource indicated by the first resource configuration when the terminal determines that it has the capability of transmitting information based on the first resource.

In some embodiments, transmitting, by the terminal, information on the first resource indicated by the first resource configuration may include, but is not limited to: receiving, by the terminal, the information on the first resource indicated by the first resource configuration, or sending, by the terminal, the information on the first resource indicated by the first resource configuration.

The power spectral density for transmission of the information on the first resource is less than or equal to the preset power spectral density threshold, which may include, but is not limited to, the following situations: a power spectral density for receiving the information on the first resource is less than or equal to the preset power spectral density threshold, or a transmitting power spectral density for sending the information on the first resource is less than or equal to the preset power spectral density threshold.

In some embodiments, the bandwidth of the first resource satisfies at least one of the following conditions.

(1) An absolute bandwidth of the first resource is greater than a first bandwidth threshold.

Exemplarily, the absolute bandwidth of the first resource is a -10dB absolute bandwidth of 500MHz or more, that is, the first bandwidth threshold is a -10dB absolute bandwidth of 500MHz. For instance, such type of resource is referred to as an ultra-wideband resource.

It should be noted that the first bandwidth threshold may also be set to be a -10dB absolute bandwidth of 400MHz or more, or a -10bB absolute bandwidth of 300MHz or more. For instance, such type of resource may be referred to as a quasi-ultra-wideband resource. The first bandwidth threshold may also be set according to actual requirements, and is not limited in the embodiment of the present disclosure.

(2) A relative bandwidth of the first resource is greater than a second bandwidth threshold.

Exemplarily, the relative bandwidth of the first resource is 20% or more, that is, the second bandwidth threshold is 20%.

It should be noted that the second bandwidth threshold may also be set to 15%, 18%, or the like, and the second bandwidth threshold may also be set according to actual requirements, and is not limited in the embodiment of the present disclosure.

(3) The bandwidth of the first resource is greater than that of a second resource.

In some embodiments, the first resource may be an ultra-wideband-based resource or a quasi-ultra-wideband-based resource; the second resource may be a non-ultra-wideband-based resource or a non-quasi-ultra-wideband-based resource.

The ultra-wideband resource may be a resource currently allocated to a UWB system, for example, 3.1GHz-10.6GHz allocated in the United States. The ultra-wideband resource may also be a resource allocated to a mobile communication network, for example, a resource allocated for 3G, 4G, 5G, 5G-A, 6G or future X-G. For example, the resource allocated to the mobile communication network (for example, by a frequency band combination or the like) may reach a large bandwidth, and may be referred to as the first resource. When a part of the resource allocated to the mobile communication network is used for non-ultra-wideband-based/non-quasi-ultra-wideband-based communication, such resource may be referred to as the second resource.

The bandwidth of the ultra-wideband is much greater than that of non-ultra-wideband systems.

(4) A difference between the bandwidth of the first resource and the bandwidth of the second resource is greater than or equal to a bandwidth difference threshold.

The difference between the bandwidth of the first resource and the bandwidth of the second resource is greater than or equal to the bandwidth difference threshold, which indicates that the difference between the bandwidth of the first resource and the bandwidth of the second resource is larger, that is, the bandwidth of the first resource is much greater than the bandwidth of the second resource.

In the embodiments of the present disclosure, an access mechanism using the first resource is referred to as a first access mechanism, and an access mechanism using the second resource is referred to as a second access mechanism.

In some embodiments, the second resource may be a traditional random access resource or a random access resource that can be configured by the current system, and the second access mechanism is a traditional access mechanism or an access mechanism used in the current system, for example, a random access mechanism used in 3G, 4G, 5G or 5G-A, 6G or future X-G.

In some embodiments, the transmitting power spectral density on the first resource satisfies at least one of the following conditions.
(A) The power spectral density for transmission of the information on the first resource is less than a transmitting power spectral density for transmission of the information on the second resource.
(B) A difference between the power spectral density for transmission of the information on the second resource and the power spectral density for transmission of the information on the first resource is greater than or equal to a power spectral density difference threshold.
   The difference between the power spectral density for transmission of the information on the second resource and the power spectral density for transmission of the information on the first resource is greater than or equal to the power spectral density difference threshold, which indicates that the difference between the power spectral density for transmission of the information on the second resource and the power spectral density for transmission of the information on the first resource is large, that is, the power spectral density for transmission of the information on the second resource is much greater than the power spectral density for transmission of the information on the first resource.
(C) The preset power spectral density threshold is determined by negotiation of two networks participating in frequency reuse.

The power spectral density for transmission of the information on the first resource is less than or equal to the preset power spectral density threshold. Exemplarily, the preset power spectral density threshold may be -41.3dBm.

The preset power spectral density threshold may be negotiated by the two networks participating in frequency reuse.

Exemplarily, if uplink transmission of a terrestrial network (TN) uses an uplink frequency of a non-terrestrial network (NTN), the NTN and the TN negotiate to give a preset power spectral density threshold (PSD-threshold). A transmitting power spectral density of the uplink transmission of the TN is PSD1, and PSD1 is smaller than PSD-threshold. PSD-threshold can ensure that uplink reception of the NTN is not disturbed when the uplink frequency of the NTN is used in the uplink transmission of the TN.

(D) The transmitting power spectral density for transmitting the information by the terminal on the first resource is determined according to a position of the terminal, the transmitting power spectral density is positively correlated with an access distance, and the access distance is a distance between the terminal and the first network device.

Optionally, different configurations may be made according to different positions of the terminal.

Exemplarily, taking the use of the uplink frequency of the NTN for the uplink transmission of the TN as an example, if UE is close to a TN base station, when the UE sends uplink data to the TN base station by using the uplink frequency of the NTN, the transmitting power spectral density may be set to be small; if the UE is far away from the TN base station, when the UE sends uplink data to the TN by using the uplink frequency of the NTN, the transmitting power spectral density may be set to be large.

(E) The power spectral density for transmitting the information by the terminal on the first resource is determined according to whether a second network device is in a target range, the second network device and the first network device communicated with the terminal participate in frequency reuse, and the target range is a certain range of an uplink communication direction from the terminal to the first network device.

Exemplarily, a value of the power spectral density may be determined according to a relationship between a satellite of the NTN and the TN base station.

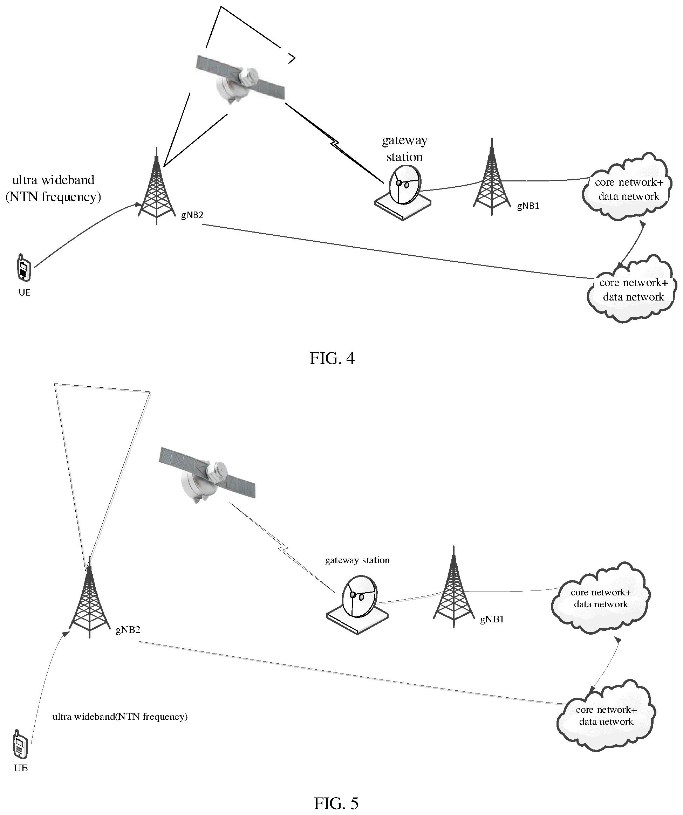

FIG. 4 is a schematic diagram in which a UE transmits uplink data to the TN base station using the uplink frequency of the NTN. As shown in FIG. 4, the satellite of the NTN is in the uplink communication direction from the UE to the TN base station, or the satellite of the NTN is within a certain range of the uplink communication direction from the UE to the TN base station, and the triangle in FIG. 4 is identified as the uplink communication direction from the UE to the TN base station or the certain range of the communication direction.

FIG. 5 is another schematic diagram in which a UE transmits uplink data to the TN base station using the uplink frequency of the NTN. As shown in FIG. 5, the satellite of the NTN is not in the uplink communication direction from the UE to the TN base station, or the satellite of the NTN is not within the certain range of the uplink communication direction from the UE to the TN base station, and the triangle in FIG. 5 is identified as the uplink communication direction from the UE to the TN base station or the certain range of the communication direction.

The NTN and the TN participate in frequency reuse, and in the case shown in FIG. 4, a small power spectral density value may be used, and in the case shown in FIG. 5, a larger power spectral density value may be used.

In some embodiments, transmitting the information on the first resource indicated by the first resource configuration includes: sending a network access process first message on the first resource.

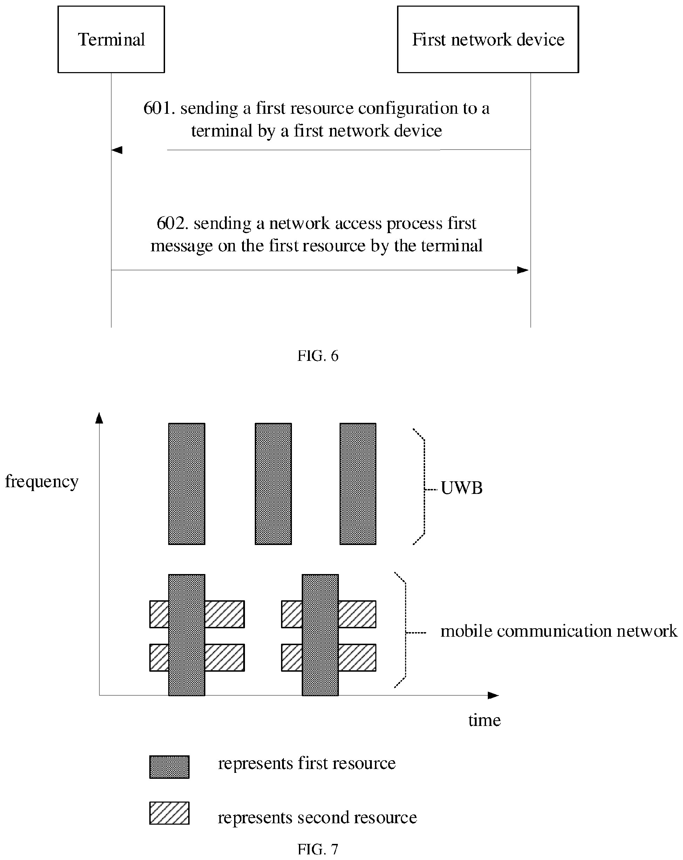

FIG. 6 is a schematic flow diagram of another messaging method according to an embodiment of the present disclosure, and the method may include, but is not limited to, the following steps.

601: sending a first resource configuration to a terminal by a first network device.

The first resource configuration is configured for indicating a first resource.

602: sending a network access process first message on the first resource by the terminal.

Correspondingly, the first network device receives the network access process first message on the first resource.

In some embodiments, the network access process first message is a first message of an uncoordinated random access technology.

In some embodiments, the method according to the embodiment of the present disclosure further includes: determining, by the terminal, that the terminal has the capability to support transmitting information based on the first resource.

In some embodiments, the network access process first message is sent on the first resource when the terminal determines that the terminal has the capability of transmitting information based on the first resource.

In some embodiments, the method according to the embodiment of the present disclosure further includes: sending a second resource configuration to the terminal by the first network device. Correspondingly, the terminal receives the second resource configuration. The second resource configuration indicates a second resource for transmitting the information.

In some embodiments, sending the network access process first message on the first resource includes: when a target condition is met, sending the network access process first message on the first resource;
where the target condition includes at least one of the following conditions:
access to a network using the second resource fails; or
a number of attempts to access the network using the second resource is greater than or equal to a first preset number.

In some embodiments, the first preset number may be configured by the network, or the first preset number may be predefined.

In some embodiments, the terminal may preferentially attempt to access the first network device using the second resource and, upon a failure to access the network, may attempt to access the first network device using the first resource.

In some embodiments, the terminal may attempt to access the first network device using the first resource in the event of multiple failures to access the first network using the second resource.

In some embodiments, after sending the network access process first message on the first resource, the terminal may further perform any one of the following operations:
upon a failure to access the network using the first resource, sending the network access process first message on the second resource; or
when a number of attempts to access the network using the first resource is greater than or equal to a second preset number, sending the network access process first message on the second resource.

In some embodiments, the second preset number may be configured by the network, or the second preset number may be predefined.

In some embodiments, the terminal may preferentially attempt to access the first network device using the first resource and, upon a failure to access the network, may attempt to access the first network device using the second resource. The "access the first network device" is understood to be access to the network where the first network device is located, the same applies to the following description, and no further explanation is performed.

In some embodiments, the terminal may attempt to access the first network device using the second resource in the event of multiple failures to access the first network device using the first resource.

In some embodiments, the terminal may determine to access the first network device using the first resource or the second resource based on channel quality or a measurement result. For example, if the channel quality is good, the first resource/the second resource is selected for use; if the channel resource is poor, the second resource/the first resource is selected for use. The measurement result is, for example, a Reference Signal Receiving Power (RSRP), Reference Signal Receiving Quality (RSRQ), or the like. The measurement result may reflect channel quality, for example, if RSRP/RSRQ is greater than a given threshold, the channel quality is defined to be good; otherwise, the channel quality is defined to be poor.

In some embodiments, sending the network access process first message on the first resource includes: sending the network access process first message on the first resource upon receiving indication information.

In some embodiments, the indication information is configured to indicate at least one of the following cases.

Case 1: the number of terminals using the second resource is greater than a preset number.

The preset number may be set according to actual requirements, and is not limited in the embodiment of the present disclosure.

Case 2: a channel quality parameter of the terminal using the first resource is greater than or equal to a channel quality threshold.

Case 3: a signal quality parameter of the terminal using the first resource is smaller than the channel quality threshold.

Case 4: a channel quality parameter of the terminal using the second resource is greater than or equal to the channel quality threshold.

Case 5: a signal quality parameter of the terminal using the second resource is smaller than the channel quality threshold.

The channel quality parameter may be a Reference Signal Receiving Power (RSRP) value. The channel quality parameter may also be other parameters that may indicate the reference signal quality, and is not limited in the embodiment of the present disclosure.

In some embodiments, the first resource is a resource allocated to the frequency band of the current UWB system.

In some embodiments, the first resource is a resource allocated to the mobile communication network. Exemplarily, the first resource is a communication resource allocated to 3G, 4G, 5G, 5G-A, 6G, or future X-G.

In some embodiments, the first resource is partially overlapped with the second resource.

FIG. 7 is a schematic diagram of the first resource and the second resource in the embodiment of the present disclosure. As shown in FIG. 7, the first resource and the second resource on the frequency band of the UWB are not overlapped, however, the first resource on the resource allocated to the mobile communication network and the second resource on the resource allocated to the mobile communication network are partially overlapped.

In the embodiment of the present disclosure, definitions for the ultra wideband and quasi-ultra wideband vary under different scenarios.

Exemplarily, in scenario 1, a frequency configuration of the ultra wideband in China includes 6GHz-9GHz with a transmitting power spectral density of -41.3dBm. In the new edition of Regulations of the People's Republic of China on Radio Frequency Allocation issued by the Ministry of Industry and Information Technology, the upper half of 6425-7125MHz of the 6GHz band is definitely allocated to international mobile telecommunications (IMT). Accordingly, the ultra wideband may use all or a part of the resource of 6GHz-9GHz (including 6425-7125MHz allocated to the IMT) with the power spectral density limit of -41.3dBm.

Exemplarily, in scenario 2, the uplink frequencies currently allocated to the NTN in frequency range 1 (FR1) in China include a band of 34MHz from 1626.5MHz to 1660.5MHz, and a band of 30MHz from 2170MHz to 2200MHz. Then, the quasi-ultra wideband may use the above 34MHz resource in a spread spectrum manner, frequency reuse is realized in a code division manner, and more random access resources can be configured. FR1 is a main frequency band of 5G, because this frequency band ranges from 450MHz to 6000MHz, the frequency is low, a penetration capability is strong, and a coverage effect is good.

In the embodiment of the present disclosure, after the terminal accesses the first network device through the ultra wideband (the first resource), the terminal may also send and receive subsequent information based on the ultra wideband (the first resource).

In some embodiments, sending and receiving the messages on the first resource indicated by the first resource configuration includes any one of the following:
receiving a random access process second message on the first resource;
sending a random access process third message on the first resource; or
receiving a random access process fourth message on the first resource.

Exemplarily, the random access process second message may be a Random Access Response (RAR).

Exemplarily, the random access process third message may be Random Access Message 3 (Msg3).

Exemplarily, the random access process fourth message may be Random Access Message 4 (Msg4).

In some embodiments, the random access process second message includes at least one of the following information:
indication information for a sending manner of the random access process third message; or
indication information for a receiving manner of the random access process fourth message.

Exemplarily, whether the random access process third message is sent through the ultra wideband (i.e., the first resource) may be indicated in the RAR.

Exemplarily, whether the random access process fourth message is received through the ultra wideband (i.e., the first resource) may be indicated in the RAR.

In some embodiments, the random access process third message includes: indication information for a receiving manner in which the terminal requests to receive the random access process fourth message.

Exemplarily, Msg3 may indicate that the terminal desires or requests to receive the random access process fourth message through the ultra wideband (i.e. the first resource).

It should be noted that, the first resource refers to resources such as the ultra wideband or the quasi-ultra wideband, and receiving of the random access process second message on the first resource, sending of the random access process third message on the first resource and receiving of the random access process fourth message on the first resource may be performed by using different resources among such resources.

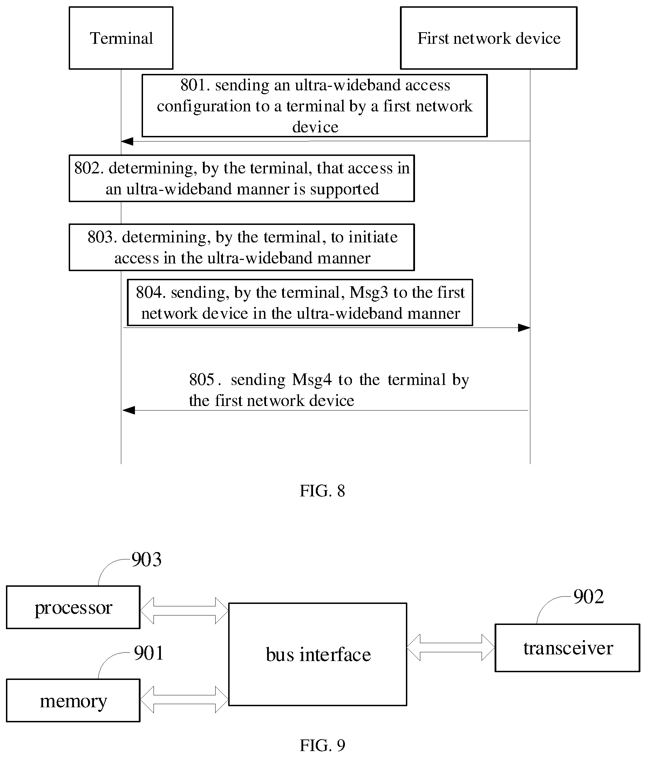

FIG. 8 is a schematic flow diagram of still another messaging method according to an embodiment of the present disclosure, and the method may include, but is not limited to, the following steps.

801: sending an ultra-wideband access configuration to a terminal by a first network device.

The ultra-wideband access configuration may be a first resource configuration, and is configured to indicate a first resource.

802: determining, by the terminal, that access in an ultra-wideband manner is supported.

803: determining, by the terminal, to initiate access in the ultra-wideband manner.

The ultra-wideband manner refers to a manner of access with the first resource.

804: sending, by the terminal, Msg3 to the first network device in the ultra-wideband manner.

Sending of Msg3 may be sending of the random access process third message.

805: sending Msg4 to the terminal by the first network device.

Sending of Msg3 may be sending of the random access process fourth message.

In some embodiments, the first resource uses pulse modulation for data transmission. Alternatively, the first resource uses a spread spectrum for data transmission. The spread spectrum may be a direct-sequence spread spectrum, a time hopping spread spectrum or a frequency hopping spread spectrum, or a combination of the above spread spectrum technologies.

In some embodiments, the first resource may also use a multi-band UWB for data transmission.

In some embodiments, the first network device may send a resource indication to the terminal, and correspondingly, the terminal may receive the resource indication sent by the first network device, where the resource indication is configured to indicate that the terminal is supported to transmit information based on the first resource.

In some embodiments, the first network device may send indication information, and the indication information is configured to indicate whether the first network device supports or allows the terminal to use a first access mechanism (i.e., the mechanism for network access using the first resource).

In some embodiments, the first network device may implicitly indicate that the first network device supports or allows the terminal to use the first access mechanism by sending a first access resource configuration.

In some embodiments, the terminal may further send any one of the following information to the first network device:
the terminal supports contention random access based on the first resource;
the terminal supports non-contention random access based on the first resource; or
the terminal supports the capability of transmitting information based on the first resource.

Correspondingly, the first network device receives any one of the above information sent by the terminal, so that the first network device can determine whether it can configure an ultra-wideband-based (i.e., first-resource-based) non-contention random access resource for the terminal. In a case that the ultra-wideband-based random access mechanism is already used during access of the first network device, the first network device may consider that the terminal supports the ultra-wideband-based non-contention random access mechanism.

In some embodiments, when the network device serving the terminal is switched from the first network device to a third network device, the terminal may send a capability indication to the third network device.

The capability indication is configured to indicate that the terminal supports the capability of transmitting information based on the first resource.

In some embodiments, when the network device serving the terminal is switched from the first network device to the third network device, the terminal sends a request message to the third network device.

The request message is configured for requesting any one of the following resources:
a resource for contention random access based on the first resource; or
a resource for non-contention random access based on the first resource.

In some embodiments, the terminal may request the third network device to allocate an ultra-wideband-based non-contention or contention random access resource. Optionally, the third network device allocates the ultra-wideband-based non-contention or contention random access resource to the terminal.

In some embodiments, the capability of supporting the ultra-wideband-based access mechanism may be communicated between the network devices, for example, the capability of supporting the ultra-wideband-based access mechanism may be communicated between the first network device and the third network device.

In some embodiments, receiving the first resource configuration includes: when the service network device of the terminal is switched from the first network device to the third network device, receiving first resource information sent by the third network device;
the first resource configuration is configured to indicate any one of the following resources:
a resource for contention random access based on the first resource; or
a resource for non-contention random access based on the first resource.

When the network device serving the terminal is switched from the first network device to the third network device, the terminal sends a capability indication to the third network device, and after the third network device receives the capability indication, the third network device sends the first resource information to the terminal.

The capability indication is configured to indicate that the terminal supports the capability of transmitting information based on the first resource.

When the network device serving the terminal is switched from the first network device to the third network device, the terminal sends a request message to the third network device, and after receiving the request message, the third network device may send the first resource information to the terminal.

The request message is configured for requesting any one of the following resources:
a resource for contention random access based on the first resource; or
a resource for non-contention random access based on the first resource.

In some embodiments, the ultra-wideband manner may have, but is not limited to, the following two modes:
short-range communication mode: this communication mode is similar to the existing UWB communication mode, with a communication distance of 10 meters or less;
long-range communication mode: this communication mode is used in, for example, a mobile communication network, and a communication distance is up to several hundred meters.

For a terminal supporting the short-range communication mode, the ultra-wideband manner used by the terminal can be configured as the short-range communication mode or the long-range communication mode.

The short-range communication mode and the long-range communication mode have some differences. For example, channel models are different, and the terminal may need to perform some different processing. For another example, data link layers may be different, the short-range communication mode uses one data link layer and the long-range communication mode uses another data link layer.

In some embodiments, the communication modes may be differentiated according to application scenarios. Exemplarily, in a case that the terminal is applied in a massive access scenario, the ultra-wideband manner configured for the terminal is the long-range communication mode.

In the embodiment of the present disclosure, the provided ultra-wideband-based access mechanism does not use the resource allocated to the mobile communication network (uses the resource allocated to the UWB system), or uses the resource allocated to the mobile communication network (does not use the resource allocated to the UWB system), so that the bandwidth of the used resource is large enough, and/or the transmitting power spectral density for sending the information on the used resource is small enough, and the resource utilization efficiency is improved. For example, even if the first resource is overlapped or partially overlapped with the resource (such as the random access resource, the data transmission resource, etc.) with a relatively small bandwidth defined by the mobile communication network, the first resource can still be used for random access or other data transmission.

It should be understood that, although the steps in the flow charts involved in the above embodiments are shown in sequence as indicated by the arrows, the steps are not necessarily performed in sequence as indicated by the arrows. Unless explicitly stated herein, the steps are not limited to being performed in the exact order and may be performed in other orders. At least part of the steps in the flow charts involved in the above embodiments may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

Based on the same technical concept, an embodiment of the disclosure further provides a communication device. The communication device can achieve the functions of the terminal or the first network device in the foregoing embodiments.

Exemplarily, FIG. 9 is a schematic structural diagram of the communication device according to an embodiment. The communication device includes a memory 901, a transceiver 902 and a processor 903, where the memory 901, the transceiver 902 and the processor 903 are connected by a bus interface.

The memory 901 is configured to store a computer program; the transceiver 902 is configured to transmit and receive data under control of the processor 903.

In the case where the communication device is the terminal, the processor 903 is configured to read the computer program in the memory 901 and perform the following operations:
receiving a first resource configuration; and
transmitting information on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In some embodiments, the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

In some embodiments, the transmitting power spectral density on the first resource satisfies at least one of the following conditions:
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for transmitting the information by the terminal on the first resource is determined according to a position of the terminal, the transmitting power spectral density is positively correlated with an access distance, and the access distance is a distance between the terminal and the first network device; or
the power spectral density for transmitting the information by the terminal on the first resource is determined according to whether a second network device is in a target range, the second network device and the first network device communicated with the terminal participate in frequency reuse, and the target range is a certain range of an uplink communication direction from the terminal to the first network device.

In some embodiments, the processor 903 is specifically configured to read the computer program in the memory 901 and perform the following operation:
sending a network access process first message on the first resource.

In some embodiments, the network access process first message is a first message of an uncoordinated random access technology.

In some embodiments, the processor 903 is also configured to read the computer program in the memory 901 and perform the following operation:
determining, by the terminal, that the terminal device has the capability to support transmitting information based on the first resource.

In some embodiments, the processor 903 is also configured to read the computer program in the memory 901 and perform the following operation:
receiving a second resource configuration,
where the second resource configuration indicates the second resource configured for transmitting the information.

In some embodiments, the processor 903 is specifically configured to read the computer program in the memory 901 and perform the following operation:
when a target condition is met, sending the network access process first message on the first resource;
the target condition includes at least one of the following conditions:
access to a network using the second resource fails; or
a number of attempts to access the network using the second resource is greater than or equal to a first preset number.

In some embodiments, the processor 903 is also configured to read the computer program in the memory 901 and perform any one of the following operations:
after sending the network access process first message on the first resource:
upon a failure to access the network using the first resource, sending the network access process first message on the second resource; or
when a number of attempts to access the network using the first resource is greater than or equal to a second preset number, sending the network access process first message on the second resource.

In some embodiments, the processor 901 is specifically configured to read the computer program in the memory 901 and perform the following operation:
sending the network access process first message on the first resource upon receiving indication information.

In some embodiments, the processor 901 is specifically configured to read the computer program in the memory 901 and perform the following operation:
sending and receiving the messages on the first resource indicated by the first resource configuration includes any one of the following steps:
receiving a random access process second message on the first resource;
sending a random access process third message on the first resource; or
receiving a random access process fourth message on the first resource.

In some embodiments, the random access process second message includes at least one of the following information:
indication information for a sending manner of the random access process third message; or
indication information for a receiving manner of the random access process fourth message.

In some embodiments, the random access process third message includes:
indication information for a receiving manner in which the terminal requests to receive the random access process fourth message.

In some embodiments, the first resource uses pulse modulation for data transmission. Alternatively, the first resource uses a spread spectrum for data transmission. The spread spectrum may be a direct-sequence spread spectrum, a time hopping spread spectrum or a frequency hopping spread spectrum, or a combination of the above spread spectrum technologies.

In some embodiments, the processor 903 is also configured to read the computer program in the memory 901 and perform the following operation:
receiving a resource indication sent by the first network device, the resource indication being configured to indicate that the terminal is supported to transmit information based on the first resource.

In some embodiments, the processor 903 is also configured to read the computer program in the memory 901 and perform the following operation:
sending any one of the following information to the first network device:
contention random access based on the first resource is supported;
non-contention random access based on the first resource is supported; or
the capability of transmitting information based on the first resource is supported.

In some embodiments, the processor 903 is also configured to read the computer program in the memory 901 and perform the following operation:
when the network device serving the terminal is switched from the first network device to a third network device, sending a capability indication to the third network device, the capability indication being configured to indicate that the terminal supports the capability of transmitting information based on the first resource.

In some embodiments, the processor 903 is also configured to read the computer program in the memory 901 and perform the following operation:
when the network device serving the terminal is switched from the first network device to the third network device, sending a request message to the third network device, the request message being configured for requesting any one of the following resources:.
a resource for contention random access based on the first resource; or
a resource for non-contention random access based on the first resource.

In some embodiments, the processor 903 is specifically configured to read the computer program in the memory 901 and perform the following operation:
when the network device serving the terminal is switched from the first network device to the third network device, receiving the first resource information sent by the third network device;
the first resource configuration is configured to indicate any one of the following resources:
a resource for contention random access based on the first resource; or
a resource for non-contention random access based on the first resource.

In the case where the communication device is the first network device, the processor 903 is configured to read the computer program in the memory 901 and perform the following operations:
sending a first resource configuration to a terminal; and
sending and receiving messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In some embodiments, the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

In some embodiments, the transmitting power spectral density on the first resource satisfies at least one of the following conditions:
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for sending the information by the terminal on the first resource is determined according to a position of the terminal, the transmitting power spectral density is positively correlated with an access distance, and the access distance is a distance between the terminal and the first network device; or
the power spectral density for sending the information by the terminal on the first resource is determined according to whether a second network device is in a target range, the second network device and the first network device communicated with the terminal participate in frequency reuse, and the target range is a certain range of an uplink communication direction from the terminal to the first network device.

In some embodiments, the processor 903 is specifically configured to read the computer program in the memory 901 and perform the following operation:
receiving a network access process first message on the first resource.

In some embodiments, the network access process first message is a first message of an uncoordinated random access technology.

In some embodiments, the processor 903 is also configured to read the computer program in the memory 901 and perform the following operation:
sending a second resource configuration to the terminal,
where the second resource configuration indicates the second resource configured for transmitting the information.

In some embodiments, the processor 903 is specifically configured to read the computer program in the memory 901 and perform the following operations:
sending indication information to the terminal; and
receiving the network access process first message on the first resource.
In some embodiments, sending and receiving the messages on the first resource indicated by the first resource configuration includes any one of the following steps:
sending a random access process second message on the first resource;
receiving a random access process third message on the first resource; or
sending a random access process fourth message on the first resource.

In some embodiments, the random access process second message includes at least one of the following information:
indication information for a sending manner of the random access process third message; or
indication information for a receiving manner of the random access process fourth message.

In some embodiments, the random access process third message includes:
indication information for a receiving manner in which the terminal requests to receive the random access process fourth message.

In some embodiments, the first resource uses pulse modulation for data transmission. Alternatively, the first resource uses a spread spectrum for data transmission. The spread spectrum may be a direct-sequence spread spectrum, a time hopping spread spectrum or a frequency hopping spread spectrum, or a combination of the above spread spectrum technologies.

In some embodiments, the processor 903 is also configured to read the computer program in the memory 901 and perform the following operation:
sending a resource indication to the terminal, the resource indication being configured to indicate that that the terminal is supported to transmit information based on the first resource.

In some embodiments, the processor 903 is also configured to read the computer program in the memory 901 and perform the following operation:
receiving any one of the following information sent by the terminal:
contention random access based on the first resource is supported;
non-contention random access based on the first resource is supported; or
the capability of transmitting information based on the first resource is supported.

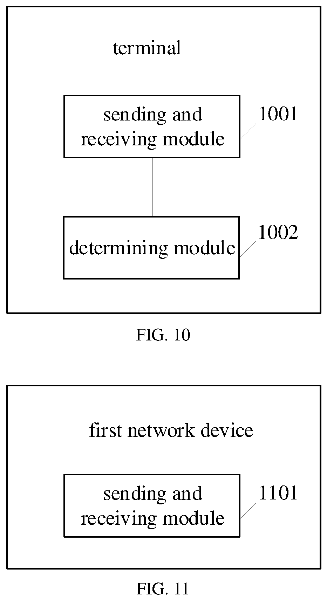

In an exemplary embodiment, as shown FIG. 10, an embodiment of the present disclosure provides a terminal, including:
a sending and receiving module 1001 configured to receive a first resource configuration sent by a first network device; and send and receive messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In some embodiments, the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

In some embodiments, the transmitting power spectral density on the first resource satisfies at least one of the following conditions:
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for transmitting the information by the terminal on the first resource is determined according to a position of the terminal, the transmitting power spectral density is positively correlated with an access distance, and the access distance is a distance between the terminal and the first network device; or
the power spectral density for transmitting the information by the terminal on the first resource is determined according to whether a second network device is in a target range, the second network device and the first network device communicated with the terminal participate in frequency reuse, and the target range is a certain range of an uplink communication direction from the terminal to the first network device.

In some embodiments, transmitting the information on the first resource indicated by the first resource configuration includes: sending a network access process first message on the first resource.

In some embodiments, the network access process first message is a first message of an uncoordinated random access technology.

In some embodiments, the terminal further includes: a determining module 1002 configured to determine that the terminal supports the capability of transmitting the information based on the first resource.

In some embodiments, the sending and receiving module 1001 is further configured to: receive a second resource configuration,
where the second resource configuration indicates the second resource configured for transmitting the information.

In some embodiments, sending the network access process first message on the first resource includes:
when a target condition is met, sending the network access process first message on the first resource;
the target condition includes at least one of the following conditions:
access to a network using the second resource fails; or
a number of attempts to access the network using the second resource is greater than or equal to a first preset number.

In some embodiments, the sending and receiving module 1001 is further configured to perform any one of the following operations after sending the network access process first message on the first resource:
upon a failure to access the network using the first resource, sending the network access process first message on the second resource; or
when a number of attempts to access the network using the first resource is greater than or equal to a second preset number, sending the network access process first message on the second resource.

In some embodiments, the first preset number and/or the second preset number are determined by at least one of:
network configuring or predefining.

In some embodiments, sending the network access process first message on the first resource includes:
sending the network access process first message on the first resource upon receiving indication information.

In some embodiments, sending and receiving the messages on the first resource indicated by the first resource configuration includes any one of the following steps:
receiving a random access process second message on the first resource;
sending a random access process third message on the first resource; or
receiving a random access process fourth message on the first resource.

In some embodiments, the random access process second message includes at least one of the following information:
indication information for a sending manner of the random access process third message; or
indication information for a receiving manner of the random access process fourth message.

In some embodiments, the random access process third message includes:
indication information for a receiving manner in which the terminal requests to receive the random access process fourth message.

In some embodiments, the first resource uses pulse modulation for data transmission. Alternatively, the first resource uses a spread spectrum for data transmission. The spread spectrum may be a direct-sequence spread spectrum, a time hopping spread spectrum or a frequency hopping spread spectrum, or a combination of the above spread spectrum technologies.

In some embodiments, the sending and receiving module 1001 is further configured to:
receive a resource indication sent by the first network device, the resource indication being configured to indicate that the terminal is supported to transmit information based on the first resource.

In some embodiments, the sending and receiving module 1001 is further configured to: send any one of the following information to the first network device:
contention random access based on the first resource is supported;
non-contention random access based on the first resource is supported; or
the capability of transmitting information based on the first resource is supported.

In some embodiments, the sending and receiving module 1001 is further configured to: when the network device serving the terminal is switched from the first network device to a third network device, send a capability indication to the third network device, the capability indication being configured to indicate that the terminal supports the capability of transmitting information based on the first resource.

In some embodiments, the sending and receiving module 1001 is further configured to: when the network device serving the terminal is switched from the first network device to the third network device, send a request message to the third network device, the request message being configured for requesting any one of the following resources:.
a resource for contention random access based on the first resource; or
a resource for non-contention random access based on the first resource.

In some embodiments, receiving the first resource configuration includes:
when the network device serving the terminal is switched from the first network device to the third network device, receiving the first resource information sent by the third network device;
the first resource configuration is configured to indicate any one of the following resources:
a resource for contention random access based on the first resource; or
a resource for non-contention random access based on the first resource.

An exemplary embodiment provides a network device which is a first network device, FIG. 10 shows a structural block diagram of the first network device, and the first network device includes:
a sending and receiving module 1101 configured to send a first resource configuration to a terminal; and
send and receive messages on a first resource indicated by the first resource configuration,
where a bandwidth of the first resource is greater than or equal to a preset bandwidth threshold, and/or a power spectral density for transmission of the information on the first resource is less than or equal to a preset power spectral density threshold.

In some embodiments, the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

In some embodiments, the transmitting power spectral density on the first resource satisfies at least one of the following conditions:
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for sending the information by the terminal on the first resource is determined according to a position of the terminal, the transmitting power spectral density is positively correlated with an access distance, and the access distance is a distance between the terminal and the first network device; or
the power spectral density for sending the information by the terminal on the first resource is determined according to whether a second network device is in a target range, the second network device and the first network device communicated with the terminal participate in frequency reuse, and the target range is a certain range of an uplink communication direction from the terminal to the first network device.

In some embodiments, sending and receiving the messages on the first resource indicated by the first resource configuration includes: receiving a network access process first message on the first resource.

In some embodiments, the network access process first message is a first message of an uncoordinated random access technology.

In some embodiments, the sending and receiving module 1101 is further configured to: send a second resource configuration to the terminal,
where the second resource configuration indicates the second resource configured for transmitting the information.

In some embodiments, receiving the network access process first message on the first resource includes:
sending indication information to the terminal; and
receiving the network access process first message on the first resource.

In some embodiments, sending and receiving the messages on the first resource indicated by the first resource configuration includes any one of the following steps:
sending a random access process second message on the first resource;
receiving a random access process third message on the first resource; or
sending a random access process fourth message on the first resource.

In some embodiments, the random access process second message includes at least one of the following information:
indication information for a sending manner of the random access process third message; or
indication information for a receiving manner of the random access process fourth message.

In some embodiments, the random access process third message includes:
indication information for a receiving manner in which the terminal requests to receive the random access process fourth message.

In some embodiments, the first resource uses pulse modulation for data transmission. Alternatively, the first resource uses a spread spectrum for data transmission. The spread spectrum may be a direct-sequence spread spectrum, a time hopping spread spectrum or a frequency hopping spread spectrum, or a combination of the above spread spectrum technologies.

In some embodiments, the sending and receiving module 1101 is further configured to: send a resource indication to the terminal, the resource indication being configured to indicate that the terminal is supported to transmit information based on the first resource.

In some embodiments, the sending and receiving module 1001 is further configured to: receive any one of the following information sent by the terminal:
contention random access based on the first resource is supported;
non-contention random access based on the first resource is supported; or
the capability of transmitting information based on the first resource is supported.

It should be noted that the division of the modules in the embodiment of the present disclosure is schematic, and is only logical function division, and there may be another division manner in actual implementation. In addition, functional modules in the embodiments of the present disclosure may be integrated into one processing module, or each of the modules may exist alone physically, or two or more modules are integrated into one module. The integrated module can be realized in the form of hardware or a software functional module.

When implemented in the form of software functional modules and sold or used as independent products, the integrated modules can be stored in a processor-readable storage medium. Based on such an understanding, the technical solutions of the present disclosure essentially, or the part contributing to the prior art, or all or a part of the technical solutions may be implemented in the form of a software product. The computer software product is stored in a storage medium and includes several instructions for instructing a computer device (which may be a terminal, or a network device) or a processor to perform all or a part of steps of the method described in the embodiment of the present disclosure.

It should be noted herein that the apparatus according to the embodiment of the present invention can implement all the method steps implemented in the method embodiment, and can achieve the same technical effects, and the same parts and beneficial effects of this embodiment as those of the method embodiment are not repeated herein.

In an embodiment, there is provided a computer-readable storage medium having a computer program stored thereon, the computer program, when executed by a processor, implementing all the method steps implemented in the above method embodiments.

In an embodiment, there is provided a computer program product including a computer program which, when executed by a processor, implements all the method steps implemented in the above method embodiments.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, databases or other media used in the embodiments of the present disclosure can include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, or the like. The transitory memory can include a random access memory (RAM), an external cache memory, or the like. By way of illustration and not limitation, the RAM can take many forms such as a static random access memory (SRAM) and a dynamic random access memory (DRAM). The databases involved in the embodiments of the present disclosure may include at least one of relational and non-relational databases. The non-relational database may include, but is not limited to, a block chain-based distributed database, or the like. The processors referred to in the embodiments of the present disclosure may include, but are not limited to, general processors, central processors, graphics processors, digital signal processors, programmable logic units, data processing logic units based on quantum calculations, or the like.

Finally, it should be noted that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present disclosure, and all of them should be included in the scope of the claims and description of the present disclosure. Particularly, as long as structural conflicts do not exist, all technical features mentioned in all the embodiments may be combined together in any mode. The present disclosure is not limited to the specific embodiments disclosed in the description, but includes all technical solutions falling into the scope of the claims.

## Claims

1. A messaging method applied to a terminal, comprises:
receiving a first resource configuration; and
transmitting information on a first resource indicated by the first resource configuration,
wherein a bandwidth of the first resource is greater than or equal to a preset bandwidth threshold, and/or a power spectral density for transmission of the information on the first resource is less than or equal to a preset power spectral density threshold.

2. The method according to claim 1, wherein the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

3. The method according to claim 1 or 2, wherein the transmitting power spectral density on the first resource satisfies at least one of the following conditions.
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for transmitting the information by the terminal on the first resource is determined according to a position of the terminal, the transmitting power spectral density is positively correlated with an access distance, and the access distance is a distance between the terminal and the first network device; or
the power spectral density for transmitting the information by the terminal on the first resource is determined according to whether a second network device is in a target range, the second network device and the first network device communicated with the terminal participate in frequency reuse, and the target range is a certain range of an uplink communication direction from the terminal to the first network device.

4. The method according to any one of claims 1 to 3, wherein transmitting the information on the first resource indicated by the first resource configuration comprises:
sending a network access process first message on the first resource.

5. The method according to claim 4, wherein the network access process first message is a first message of an uncoordinated random access technology.

6. The method according to any one of claims 1 to 5, further comprising:
determining, by the terminal, that the terminal has a capability to support transmitting the information based on the first resource.

7. The method according to claim 4, further comprising:
receiving a second resource configuration,
wherein the second resource configuration indicates the second resource configured for transmitting the information.

8. The method according to claim 7, wherein sending the network access process first message on the first resource comprises:
when a target condition is met, sending the network access process first message on the first resource;
wherein the target condition comprises at least one of the following conditions:
access to a network using the second resource fails; or
a number of attempts to access the network using the second resource is greater than or equal to a first preset number.

9. The method according to claim 7, after sending the network access process first message on the first resource, further comprising any one of following operations:
upon a failure to access the network using the first resource, sending the network access process first message on the second resource; or
when a number of attempts to access the network using the first resource is greater than or equal to a second preset number, sending the network access process first message on the second resource.

10. The method according to claim 8 or 9, wherein the first preset number and/or the second preset number are determined by at least one of:
network configuring or predefining.

11. The method according to claim 4, wherein sending the network access process first message on the first resource comprises:
sending the network access process first message on the first resource upon receiving indication information.

12. The method according to any one of claims 1 to 3, wherein sending and receiving the messages on the first resource indicated by the first resource configuration comprises any one of the following steps:
receiving a random access process second message on the first resource;
sending a random access process third message on the first resource; or
receiving a random access process fourth message on the first resource.

13. The method according to claim 12, wherein the second message comprises at least one of the following information:
indication information for a sending manner of the random access process third message; or
indication information for a receiving manner of the random access process fourth message.

14. The method according to claim 12, wherein the random access process third message comprises:
indication information for a receiving manner in which the terminal requests to receive the random access process fourth message.

15. The method according to any one of claims 1 to 3, wherein the first resource uses pulse modulation for data transmission.

16. The method according to any one of claims 1 to 3, further comprising:
receiving a resource indication sent by the first network device, the resource indication being configured to indicate that the terminal is supported to transmit information based on the first resource.

17. The method according to any one of claims 1 to 3, further comprising:
sending any one of the following information to the first network device:
contention random access based on the first resource is supported;
non-contention random access based on the first resource is supported; or
the capability of transmitting information based on the first resource is supported.

18. The method according to any one of claims 1 to 3, further comprising:
when the network device serving the terminal is switched from the first network device to a third network device, sending a capability indication to the third network device, the capability indication being configured to indicate that the terminal supports the capability of transmitting information based on the first resource.

19. The method according to any one of claims 1 to 3, further comprising:
when the network device serving the terminal is switched from the first network device to the third network device, sending a request message to the third network device, the request message being configured for requesting any one of the following resources:.
a resource for contention random access based on the first resource; or
a resource for non-contention random access based on the first resource.

20. The method according to any one of claims 1 to 3, wherein receiving the first resource configuration comprises:
when the network device serving the terminal is switched from the first network device to the third network device, receiving the first resource information sent by the third network device;
wherein the first resource configuration is configured to indicate any one of the following resources:
a resource for contention random access based on the first resource; or
a resource for non-contention random access based on the first resource.

21. A messaging method applied to a first network device, comprising:
sending a first resource configuration to a terminal; and
sending and receiving messages on a first resource indicated by the first resource configuration,
wherein a bandwidth of the first resource is greater than or equal to a preset bandwidth threshold, and/or a power spectral density for transmission of the information on the first resource is less than or equal to a preset power spectral density threshold.

22. The method according to claim 21, wherein the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

23. The method according to claim 21 or 22, wherein the transmitting power spectral density on the first resource satisfies at least one of the following conditions.
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for transmitting the information by the terminal on the first resource is determined according to a position of the terminal, the transmitting power spectral density is positively correlated with an access distance, and the access distance is a distance between the terminal and the first network device; or
the power spectral density for transmitting the information by the terminal on the first resource is determined according to whether a second network device is in a target range, the second network device and the first network device communicated with the terminal participate in frequency reuse, and the target range is a certain range of an uplink communication direction from the terminal to the first network device.

24. The method according to any one of claims 21 to 23, wherein sending and receiving the messages on the first resource indicated by the first resource configuration comprises: receiving a network access process first message on the first resource.

25. The method according to claim 24, wherein the network access process first message is a first message of an uncoordinated random access technology.

26. The method according to any one of claims 21 to 25, further comprising:
sending a second resource configuration to the terminal,
wherein the second resource configuration indicates the second resource configured for transmitting the information.

27. The method according to claim 24, wherein receiving the network access process first message on the first resource comprises:
sending indication information to the terminal; and
receiving the network access process first message on the first resource.

28. The method according to any one of claims 21 to 23, wherein sending and receiving the messages on the first resource indicated by the first resource configuration comprises any one of the following steps:
sending a random access process second message on the first resource;
receiving a random access process third message on the first resource; or
sending a random access process fourth message on the first resource.

29. The method according to claim 28, wherein the second message comprises at least one of the following information:
indication information for a sending manner of the random access process third message; or
indication information or a receiving manner of the random access process fourth message.

30. The method according to claim 28, wherein the random access process third message comprises:
indication information for a receiving manner in which the terminal requests to receive the random access process fourth message.

31. The method according to any one of claims 21 to 23, wherein the first resource uses pulse modulation for data transmission.

32. The method according to any one of claims 21 to 23, further comprising:
sending a resource indication to the terminal, the resource indication being configured to indicate that the terminal is supported to transmit information based on the first resource.

33. The method according to any one of claims 21 to 23, further comprising:
receiving any one of the following information sent by the terminal:
contention random access based on the first resource is supported;
non-contention random access based on the first resource is supported; or
the capability of transmitting information based on the first resource is supported.

34. A terminal, comprising:
a memory for storing a computer program; a transceiver for transceiving data under control of a processor; and the processor for reading the computer program in the memory and performing the following operations:
receiving a first resource configuration; and
transmitting information on a first resource indicated by the first resource configuration,
wherein a bandwidth of the first resource is greater than or equal to a preset bandwidth threshold, and/or a power spectral density for transmission of the information on the first resource is less than or equal to a preset power spectral density threshold.

35. The terminal according to claim 34, wherein the bandwidth of the first resource satisfies at least one of the following conditions:
an absolute bandwidth of the first resource is greater than a first bandwidth threshold;
a relative bandwidth of the first resource is greater than a second bandwidth threshold;
the bandwidth of the first resource is greater than that of a second resource; or
a difference between the bandwidth of the first resource and the bandwidth of the second resource is greater than or equal to a bandwidth difference threshold.

36. The terminal according to claim 34 or 35, wherein the transmitting power spectral density on the first resource satisfies at least one of the following conditions.
the power spectral density for transmission of the information on the first resource is less than a transmitting power spectral density for transmission of the information on the second resource;
a difference between the power spectral density for transmission of the information on the second resource and the power spectral density for transmission of the information on the first resource is greater than or equal to a power spectral density difference threshold;
the preset power spectral density threshold is determined by negotiation of two networks participating in frequency reuse;
the transmitting power spectral density for transmitting the information by the terminal on the first resource is determined according to a position of the terminal, the transmitting power spectral density is positively correlated with an access distance, and the access distance is a distance between the terminal and the first network device; or
the power spectral density for transmitting the information by the terminal on the first resource is determined according to whether a second network device is in a target range, the second network device and the first network device communicated with the terminal participate in frequency reuse, and the target range is a certain range of an uplink communication direction from the terminal to the first network device.

37. The terminal according to any one of claims 34 to 36, wherein the processor is specifically configured to read the computer program in the memory and perform the following operation:
sending a network access process first message on the first resource.

38. The terminal according to claim 37, wherein the network access process first message is a first message of an uncoordinated random access technology.

39. The terminal according to any one of claims 34 to 38, wherein the processor is further configured to read the computer program in the memory and perform the following operation:
determining, by the terminal, that the terminal has a capability to support transmitting the information based on the first resource.

40. The terminal according to claim 37, wherein the processor is further configured to read the computer program in the memory and perform the following operation:
receiving a second resource configuration,
wherein the second resource configuration indicates the second resource configured for transmitting the information.

41. The terminal according to claim 40, wherein the processor is specifically configured to read the computer program in the memory and perform the following operation:
when a target condition is met, sending the network access process first message on the first resource;
wherein the target condition comprises at least one of the following conditions:
access to a network using the second resource fails; or
a number of attempts to access the network using the second resource is greater than or equal to a first preset number.

42. The terminal according to claim 40, wherein the processor is further configured to read the computer program in the memory and perform the following operations:
after sending the network access process first message on the first resource, further performing any one of the following operations:
upon a failure to access the network using the first resource, sending the network access process first message on the second resource; or
when a number of attempts to access the network using the first resource is greater than or equal to a second preset number, sending the network access process first message on the second resource.

43. The terminal according to claim 37, wherein the processor is specifically configured to read the computer program in the memory and perform the following operation:
sending the network access process first message on the first resource upon receiving indication information.

44. The terminal according to any one of claims 34 to 36, wherein the processor is specifically configured to read the computer program in the memory and perform the following operation:
sending and receiving the messages on the first resource indicated by the first resource configuration comprises any one of the following steps:
receiving a random access process second message on the first resource;
sending a random access process third message on the first resource; or
receiving a random access process fourth message on the first resource.

45. The terminal according to claim 44, wherein the second message comprises at least one of the following information:
indication information for a sending manner of the random access process third message; or
indication information of a receiving manner of the random access process fourth message.

46. The terminal according to claim 44, wherein the random access process third message comprises:
indication information for a receiving manner in which the terminal requests to receive the random access process fourth message.

47. The terminal according to any one of claims 34 to 36, wherein the first resource uses pulse modulation for data transmission.

48. The terminal according to any one of claims 34 to 36, wherein the processor is further configured to read the computer program in the memory and perform the following operation:
receiving a resource indication sent by the first network device, the resource indication being configured to indicate that the terminal is supported to transmit information based on the first resource.

49. The terminal according to any one of claims 34 to 36, wherein the processor is further configured to read the computer program in the memory and perform the following operation:
sending any one of the following information to the first network device:
contention random access based on the first resource is supported;
non-contention random access based on the first resource is supported; or
the capability of transmitting information based on the first resource is supported.

50. The terminal according to any one of claims 34 to 36, wherein the processor is further configured to read the computer program in the memory and perform the following operation:
when the network device serving the terminal is switched from the first network device to a third network device, sending a capability indication to the third network device, the capability indication being configured to indicate that the terminal supports the capability of transmitting information based on the first resource.

51. The terminal according to any one of claims 34 to 36, wherein the processor is further configured to read the computer program in the memory and perform the following operation:
when the network device serving the terminal is switched from the first network device to the third network device, sending a request message to the third network device, the request message being configured for requesting any one of the following resources:.
a resource for contention random access based on the first resource; or
a resource for non-contention random access based on the first resource.

52. The terminal according to any one of claims 34 to 36, wherein the processor is specifically configured to read the computer program in the memory and perform the following operation:
when the network device serving the terminal is switched from the first network device to the third network device, receiving the first resource information sent by the third network device;
wherein the first resource configuration is configured to indicate any one of the following resources:
a resource for contention random access based on the first resource; or
a resource for non-contention random access based on the first resource.

53. A network device, comprising:
a memory for storing a computer program; a transceiver for transmitting and receiving data under control of a processor; and the processor for reading the computer program in the memory and performing the following operations:
sending a first resource configuration to a terminal; and
sending and receiving messages on a first resource indicated by the first resource configuration,
wherein a bandwidth of the first resource is greater than or equal to a preset bandwidth threshold, and/or a power spectral density for transmission of the information on the first resource is less than or equal to a preset power spectral density threshold.

54. A terminal, comprising:
a sending and receiving module configured to receive a first resource configuration sent by a first network device; and
send and receive messages on a first resource indicated by the first resource configuration,
wherein a bandwidth of the first resource is greater than or equal to a preset bandwidth threshold, and/or a power spectral density for transmission of the information on the first resource is less than or equal to a preset power spectral density threshold.

55. A network device, comprising:
a sending and receiving module configured to send a first resource configuration to a terminal; and
send and receive messages on a first resource indicated by the first resource configuration,
wherein a bandwidth of the first resource is greater than or equal to a preset bandwidth threshold, and/or a power spectral density for transmission of the information on the first resource is less than or equal to a preset power spectral density threshold.

56. A computer-readable storage medium storing a computer program, the computer program, when executed by a processor, implementing the method according to any one of claims 1 to 33.
